# EUROPÄISCHE PATENTSCHRIFT

(11) **EP 1 952 551 B1**
(45) Veröffentlichungstag und Bekanntmachung des Hinweises auf die Patenterteilung: **15.08.2012**
(21) Anmeldenummer: 06807666.0
(22) Anmeldetag: 30.10.2006
(51) Int. Cl.: H04B 7/08

(54) **EMPFÄNGER UND VERFAHREN ZUM EMPFANGEN EINES DIGITALEN FUNKSIGNALS UND ZUM BEREITSTELLEN EINES DATENSTROMS**
RECEIVER AND METHOD FOR RECEIVING A DIGITAL RADIO SIGNAL AND FOR PROVIDING A DATA FLOW
RECEPTEUR ET PROCEDE POUR RECEVOIR UN SIGNAL RADIO NUMERIQUE ET POUR PREPARER UN FLUX DE DONNEES

(30) Priorität: 16.11.2005 DE 102005054574
(43) Veröffentlichungstag der Anmeldung: 06.08.2008
(73) Patentinhaber: ROBERT BOSCH GMBH, 70442 Stuttgart (DE)
(72) Erfinder: HOFMANN, Frank, 31139 Hildesheim (DE); SPREITZ, Gerald, 30880 Laatzen (DE)
(86) Internationale Anmeldenummer: PCT/EP2006/067941
(87) Internationale Veröffentlichungsnummer: WO 2007/057298

(56) Entgegenhaltungen:
- EP-A- 0 967 746
- WO-A-02/078214
- WO-A2-2005/084379
- US-A1- 2003 035 498
- US-A1- 2005 101 264

## Beschreibung

### Stand der Technik

Die Erfindung betrifft einen Empfänger zum Empfangen eines digitalen Funksignals und zum Bereitstellen eines Datenstroms, insbesondere ein Zwei-Empfängersystem. Die Erfindung betrifft weiterhin ein Verfahren zum Empfangen eines digitalen Funksignals und zum Bereitstellen eines Datenstromes.

Empfänger für digitale Funksignale, insbesondere DAB-Empfänger (Ein-Empfängersysteme), empfangen in der Regel nur über einen Übertragungskanal (ein Funksignal) die digitalen Daten, wobei nur eine bestimmte Anzahl von verschiedenen Diensten, z.B. Radioprogrammen, bereitgestellt werden können. Diese Dienste bilden das so genannte Ensemble und werden in aufeinander folgenden Rahmen in dem Funksignal übertragen.

Bei bisherigen DAB-Empfängern ist es in der Regel nicht möglich, einen Dienst, z.B. ein Audiosignal, aus einem Ensemble auf einem Übertragungskanal auszuwählen und einen weiteren Dienst, z.B. einen Datendienst, aus einem anderen Ensemble, d.h. auf einem weiteren Übertragungskanal, gleichzeitig zu nutzen.

Weiterhin weisen herkömmliche DAB-Empfänger bei einem gestörten Übertragungskanal nur unzureichende Möglichkeiten auf, die oftmals hohe Bitfehlerraten im dekodierten Empfangssignal zu reduzieren, so dass es z.B. zu hörbaren Störungen im Audiosignal führt.

Die Offenlegungsschrift US 2003/0035498 A1 zeigt ein Radioempfangssystem, wobei Signale empfangen werden. Hierbei wird eine Phasendifferenz der empfangenen Signale berechnet, bevor diese miteinander kombiniert werden. In einem auderen Betriebsmodus werden die Signale nicht kombiniert was bei gutem Empfangsbedingungen den Empfang verschiedener signale erlaubt. Die Offenlegungsschrift WO 02/078214 A1 zeigt ein Verfahren und eine Vorrichtung zur Unterdrückung von Multipath-Störungen bei einem Empfänger für elektromagnetische Wellen.

Die Offenlegungsschrift EP 0 967 746 A2 zeigt ein Radioempfangssystem und eine nRBS-Dekoder.

Die Offenlegungsschrift WO 2005/084379 A2 zeigt ein Verfahren und eine Vorrichtung zum Empfangen von drahtlos übermittelten Signalen.

Die Offenlegungsschrift US 2005/0101264 A1 zeigt drahtlose Kommunikationsstrukturen und -verfahren.

Es ist Aufgabe der vorliegenden Erfindung, einen Empfänger zum Empfangen von digitalen Funksignalen zum Bereitstellen mindestens eines Datenstromes zur Verfügung zu stellen, der zum einen in der Lage ist, mehrere Datenströme aus unterschiedlichen Ensembles zu empfangen und weiterhin einen Diversity-Empfang zur Verbesserung der Fehlerrate des Datenstroms durchführen kann. Es ist weiterhin Aufgabe der vorliegenden Erfindung, ein Verfahren zum Betreiben eines solchen Empfängers zur Verfügung zu stellen.

Diese Aufgabe wird durch den Empfänger zum Empfangen eines digitalen Funksignals und zum Bereitstellen eines Datenstroms sowie durch das entsprechende Verfahren gemäß der unabhängigen Ansprüche gelöst.

Weitere vorteilhafte Ausgestaltungen der Erfindung sind in den abhängigen Ansprüchen angegeben.

Gemäß einem ersten Aspekt der vorliegenden Erfindung ist ein Empfänger zum Empfangen von digitalen Funksignalen und zum Bereitstellen eines Datenstroms vorgesehen. Der Empfänger umfasst mehrere Empfangseinheiten, die jeweils gestaltet sind, um ein digitales Funksignal zu empfangen und zu einem Zwischensignal zu demodulieren. Weiterhin umfasst der Empfänger eine Kombiniereinheit, um die Zwischensignale zur Verbesserung der Qualität zu einem resultierenden kombinierten Zwischensignal zu kombinieren. Ferner umfasst der Empfänger eine Schalteinheit, die mit den Empfangseinheiten verbunden ist und die gestaltet ist, um entweder in einem ersten Betriebsmodus mindestens eines der Zwischensignale der mehreren Empfangseinheiten zum Dekodieren auszuwählen, oder um in einem zweiten Betriebsmodus die Zwischensignale der mehreren Empfangseinheiten der Kombiniereinheit zur Verfügung zu stellen. Mithilfe eines Kanaldekodierers, der mit der Schalteinheit und der Kombiniereinheit verbunden ist, wird entweder das ausgewählte Zwischensignal oder das kombinierte Zwischensignal zu einem Datenstrom dekodiert.

Der erfindungsgemäße Empfänger ermöglicht es, mithilfe der Schalteinheit zwei Betriebsmodi einzunehmen, wobei in dem ersten Betriebsmodus mindestens ein Datenstrom entsprechend eines empfangenen Funksignals dekodiert wird und wobei entsprechend einem zweiten Betriebsmodus zwei oder mehr Zwischensignale, die durch die Demodulation derselben Funksignale bzw. der Demodulation von Funksignalen mit demselben Inhalt erhalten werden zu einem kombinierten Zwischensignal kombiniert werden, um die Qualität des darin kodierten Datenstroms zu verbessern. Die Kombination von zwei Zwischensignalen, die über unabhängig empfangene Funksignale erhalten wurden, ist als Diversity-Empfang bekannt, wobei die Kombination dazu dient, die Empfangsqualität zu verbessern. Durch die Schalteinheit wird es also möglich, in einem Zwei- oder Mehr-Empfängersystem sowohl eines oder mehrere der Funksignale zu einem oder mehreren Datenströmen zu demodulieren und dekodieren und zum anderen ist es möglich, durch Kombination der aus den Funksignalen erhaltenen Zwischensignale die Empfangsqualität des jeweiligen Signals zu verbessern.

Gemäß der Erfindung ist eine Steuereinheit zum Auswählen des Betriebsmodus vorgesehen, wobei die Steuereinheit mit den Empfangseinheiten verbunden ist, um die Empfangseinheiten in dem zweiten Betriebsmodus auf dasselbe Funksignal abzustimmen und um die Empfangseinheiten in dem ersten Betriebsmodus auf verschiedene Funksignale abzustimmen. Auf diese Weise ist es möglich, mehrere Datenströme, die in verschiedenen Funksignalen enthalten sind, gleichzeitig zu empfangen oder für den Diversity-Empfang die Empfangseinheiten auf dasselbe Funksignal einzustellen, um dadurch eine Empfangsverbesserung zu erreichen.

Erfindungsgemäß weist jedes der Zwischensignale Rahmen auf, in denen jeweils mehrere Datendienste in Blöcken angeordnet sind, wobei die Steuereinheit eine Detektionseinheit zum Detektieren der zeitlichen Position der Blöcke aufweist, um bei einem zeitlich nicht überlappenden Empfangen von Blöcken der mehreren Zwischensignale zwischen dem ersten und dem zweiten Betriebsmodus zu wechseln. Dies ermöglicht es, mehrere Datendienste gleichzeitig zu nutzen und zudem eine Qualitätsverbesserung durch das Kombinieren der mehreren Zwischensignale zu nutzen.

Um gleichzeitig zwei Datendienste aus verschiedenen Sendequellen zu erhalten und den Diversity-Empfang zu nutzen, kann weiterhin vorgesehen sein, dass die Schalteinheit gestaltet ist, um ein erstes und zweites Zwischensignal dem Kanaldekodierer in dem ersten Betriebsmodus zur Verfügung zu stellen, wobei die Steuereinheit in dem zweiten Betriebsmodus die mehreren Empfangseinheiten wechselweise zum Empfangen des dem ersten Zwischensignal zugrunde liegenden Funksignal abstimmt. Auf diese Weise können zum einen zwei verschiedene Datenströme aus verschiedenen Sendequellen empfangen werden und, wenn die Datenströme in Blöcken übertragen werden, die sich zeitlich nicht überlappen, ein Diversity-Empfang angewendet werden, so dass eine Signalverbesserung und dadurch eine reduzierte Bitfehlerrate möglich ist.

Gemäß einer bevorzugten Ausführungsform kann die Kombiniereinheit die Zwischensignale addieren, um das kombinierte Zwischensignal zu erhalten. Insbesondere können die Zwischensignale vor dem Addieren abhängig von einer jeweiligen Empfangsqualität des dem Zwischensignal zugrunde liegenden Funksignals mit einem Gewichtungsfaktor gewichtet werden.

Gemäß einer bevorzugten Ausführungsform weisen die Zwischensignale Ensembles mit mehreren Datendiensten auf, die in Blöcken innerhalb eines Rahmens bereitgestellt werden. Die Schalteinheit kann weiterhin so gestaltet sein, dass die mehreren Zwischensignale einer De-Interleaver-Einheit zur Verfügung gestellt werden. Die De-Interleaver-Einheit wählt aus den mehreren Zwischensignalen jeweils mindestens einen Block aus und stellt Blöcke nacheinander dem Kanaldekodierer zur Verfügung. Insbesondere kann die De-Interleaver-Einheit eine Speichereinheit aufweisen, um sich zeitlich überlappende Blöcke verschiedener Zwischensignale zwischenzuspeichern und diese mithilfe einer weiteren Schalteinheit nacheinander an den Kanaldekodierer auszugeben. Der Kanaldekodierer kann so gestaltet sein, um die Blöcke der verschiedenen Zwischensignale zu mehreren Datenströmen zu dekodieren.

Gemäß einem weiteren Aspekt der vorliegenden Erfindung ist ein Verfahren zum Empfangen eines digitalen Funksignals und zum Bereitstellen eines Datenstromes vorgesehen. Das Verfahren umfasst die Schritte des Empfangens von mehreren digitalen Funksignalen, des Demodulierens der mehreren Funksignale jeweils zu einem Zwischensignal und des Auswählens in einem ersten Betriebsmodus mindestens eines der Zwischensignale zum Dekodieren oder des Kombinierens der Zwischensignale in einem zweiten Betriebsmodus zu einem kombinierten Zwischensignal zur Verbesserung der Qualität des Zwischensignals und des Dekodierens entweder des ausgewählten Zwischensignals oder des kombinierten Zwischensignals zu einem Datenstrom.

Das erfindungsgemäße Verfahren hat den Vorteil, dass eine Empfangsmöglichkeit zum parallelen Empfangen von mehreren Funksignalen einerseits zur Signalverbesserung im Sinne eines Diversity-Empfangs genutzt werden kann und andererseits dazu genutzt werden kann, einem Benutzer mehrere verschiedene Datenströme, z.B. einen Audiodatenstrom und einen sonstigen Datenstrom, zur Verfügung zu stellen.

Es wird in dem zweiten Betriebsmodus dasselbe Funksignal mehrfach empfangen und in dem ersten Betriebsmodus verschiedene Funksignale empfangen.

Gemäß der Erfindung weist jedes der Zwischensignale Rahmen auf, in dem jeweils mehrere Datendienste in Blöcken angeordnet sind, wobei die zeitliche Position der Blöcke der mehreren Zwischensignale detektiert wird, wobei bei einem zeitlich nicht überlappenden Empfangen der Blöcke der mehreren Zwischensignale zwischen dem ersten und dem zweiten Betriebsmodus gewechselt wird, um mehrere Datenströme zu erhalten und die Qualität der Zwischensignale zu verbessern.

Vorzugsweise weisen die Zwischensignale Ensembles mit mehreren Datendiensten auf, die in Blöcken innerhalb von Rahmen bereitgestellt werden, wobei aus den mehreren Zwischensignalen jeweils mindestens ein Block ausgewählt wird und die ausgewählten Blöcke nacheinander dekodiert werden. Insbesondere können sich zeitlich überlappende Blöcke verschiedener Zwischensignale zwischengespeichert werden und die Blöcke nacheinander zum Dekodieren weitergegeben werden.

Bevorzugte Ausführungsformen der Erfindung werden nachfolgend anhand der beigefügten Zeichnungen näher erläutert. Es zeigen:
Fig. 1 ein Blockschaltbild eines ersten Teils eines Zwei-Empfängersystems zum Empfang von digitalen Funksignalen;
Fig. 2 ein sich anschließender Teil des Zwei-Empfängersystems zum Erhalten eines ersten und eines zweiten Datenstromes;
Fig. 3 einen Ausschnitt aus dem Zwei-Empfängersystem der Figuren 1 und 2 zur Veranschaulichung der Betriebszustände, die durch das Schaltwerk eingestellt werden können;
Fig. 4 verdeutlicht das Umschalten zwischen zwei Ensembles, um zwei verschiedene Dienste dem Benutzer bereitstellen zu können.

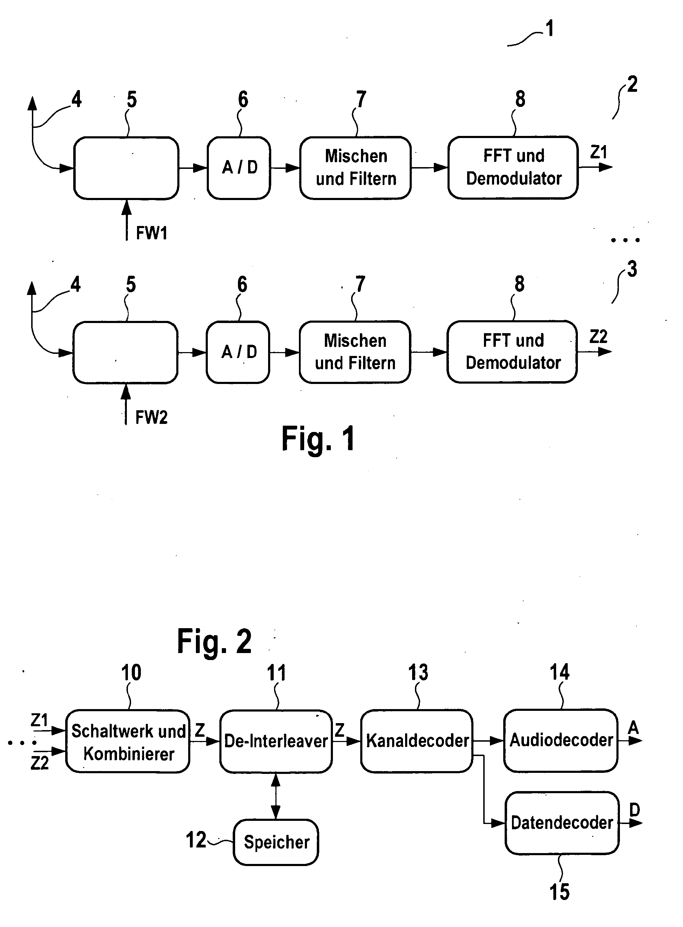

In Fig. 1 ist ein Blockschaltbild eines DAB-Empfängers 1 mit zwei Empfangspfaden 2, 3 dargestellt. Ein solches System wird auch Zwei-Empfängersystem genannt. Jeder der Empfangspfade 2, 3 weist eine Antenne 4 auf, die das Funksignal empfängt, das in einer jeweiligen Vorstufe 5 gemischt und gefiltert wird, um das jeweilige empfangene Funksignal auf eine Zwischenfrequenz zu demodulieren. Anschließend werden die jeweiligen Zwischensignale einem jeweiligen Analog-Digital-Wandler 6 zugeführt, der das Signal abtastet und dieses digitalisiert. In einer nachfolgenden Mischer- und Filtereinheit 7 wird das digitalisierte Zwischensignal in das komplexe Basisband gemischt und erneut gefiltert und das gemischte und gefilterte digitale Zwischensignal einem OFDM-Demodulator 8 zugeführt, in dem das gemischte und gefilterte digitale Zwischensignal mithilfe einer FFT-(Fast Fourier Transformation)- und einer DQPSK-Demodulation demoduliert wird. Man erhält ein erstes und ein zweites OFDM-Zwischensignal Z1, Z2 aus den beiden Empfangspfaden 2, 3. Das Demodulieren der empfangenen Funksignale in OFDM-Zwischensignale Z1, Z2 ist aus dem Stand der Technik hinreichend bekannt und wird aus diesem Grund hier nicht weiter erläutert.

Bei DAB (EN 300 401) werden einzelne Rundfunkprogramme in so genannten Diensten zu Ensembles zusammengefasst und gemeinsam moduliert. Die Ensembles werden auf einer Sendefrequenz übertragen. Ein typisches DAB-Ein-Empfängersystem kann ein Ensemble demodulieren und dekodieren. Ein Benutzer des DAB-Empfängers wählt dabei aus dem Ensemble den Dienst heraus, den er empfangen möchte, im Falle eines Audiodienstes denjenigen, den er hören möchte. Alternativ oder auch zusätzlich können weitere Dienste, z.B. Datendienste ausgewählt werden, die im gleichen Ensemble übertragen werden. In vielen Empfangsgebieten ist jedoch mehr als ein Ensemble auf verschiedenen Sendefrequenzen zu empfangen. Der Benutzer des herkömmlichen DAB-Empfängers wählt damit zuerst das gewünschte Ensemble aus und anschließend den gewünschten Dienst in dem ausgewählten Ensemble. Möchte der Benutzer des DAB-Empfängers zwei Dienste gleichzeitig empfangen, welche verschiedenen Ensembles, d.h. verschiedenen Sendefrequenzen zugeordnet sind, so ist dies mit einem Ein-Empfängersystem nicht möglich. Aus diesem Grunde wird nachfolgend ein Zwei-Empfängersystem vorgeschlagen, das den Empfang von zwei Diensten aus verschiedenen Ensembles ermöglicht.

Weiterhin ist es bekannt, dass durch Diversity der Empfang eines Signals verbessert werden kann. Dabei wird dasselbe Signal von zwei verschiedenen Antennen empfangen und die daraus erhaltenen Zwischensignale in einer so genannten Kombiniereinheit miteinander kombiniert. Dadurch lässt sich eine Fehlerrate im Signal verringern. Das Kombinieren der Signale kann erfolgen, indem beispielsweise beide Signale bewertet werden und das Signal der besseren Qualität ausgewählt wird, während das jeweils andere verworfen wird. Weiterhin kann das Kombinieren durch Addition bzw. einer gewichteten Addition der beiden Signale erfolgen, wobei die Gewichtungsfaktoren von den Signal-Rausch-Verhältnissen der entsprechenden Funksignale bzw. Zwischensignale abhängen. Alternativ kann der Diversity-Empfang auch durch das Empfangen von verschiedenen Funksignalen realisiert werden, die ganz oder teilweise identische Dienste bzw. Programme enthalten.

Der Vorstufen 5 können mithilfe eines Frequenzwahlsignals FW1, FW2 jeweils auf eine bestimmte Empfangsfrequenz eingestellt werden, so dass die Antenne 4 im Diversity-Fall auf derselben Empfangsfrequenz empfangen wird. Sollen zwei Dienste auf unterschiedlichen Ensembles empfangen werden, können die ersten Vorstufen 5 auf unterschiedliche Empfangsfrequenzen, nämlich auf die beiden Empfangsfrequenzen der Ensembles eingestellt werden.

In Fig. 2 ist ein zweiter Teil des DAB-Empfängers 1 gemäß der vorliegenden Erfindung dargestellt. Die OFDM-Zwischensignale Z1 und Z2 werden einer Schalt- und Kombiniereinheit 10 zugeführt, in dem abhängig von einer ausgewählten Betriebsart entweder eines der beiden OFDM-Zwischensignale Z1, Z2 oder beide ausgewählt werden oder beide Zwischensignale Z1, Z2 miteinander zu einem kombinierten Zwischensignal kombiniert werden. Anschließend wird das kombinierte oder ausgewählte Zwischensignal Z einer De-Interleaver-Einheit 11 zugeführt, die mit einem zusätzlichen Speicher 12 verbunden ist. Der De-Interleaver 11 dient dazu, die ursprüngliche Bitreihenfolge wiederherzustellen, die in einer Sendeeinrichtung in einem entsprechenden Interleaver verwürfelt wurde, und stellt das ausgewählte oder kombinierte Zwischensignal Z einem Kanaldekodierer 13 zur Verfügung, der das Zwischensignal Z dekodiert und je nach Art der zu empfangenen Daten diese einem Audiodekodierer 14 oder einem Datendekodierer 15 zur Verfügung stellt, um einen entsprechenden Audiodatenstrom A oder Nutzdatenstrom D dem Benutzer zur Ausgabe bereitzustellen. Die dekodierten Datenströme können also eine beliebige Art von Informationen enthalten, wie z. B. eine Video-, Audio-, Programm-, Anzeigeinformation oder dergleichen.

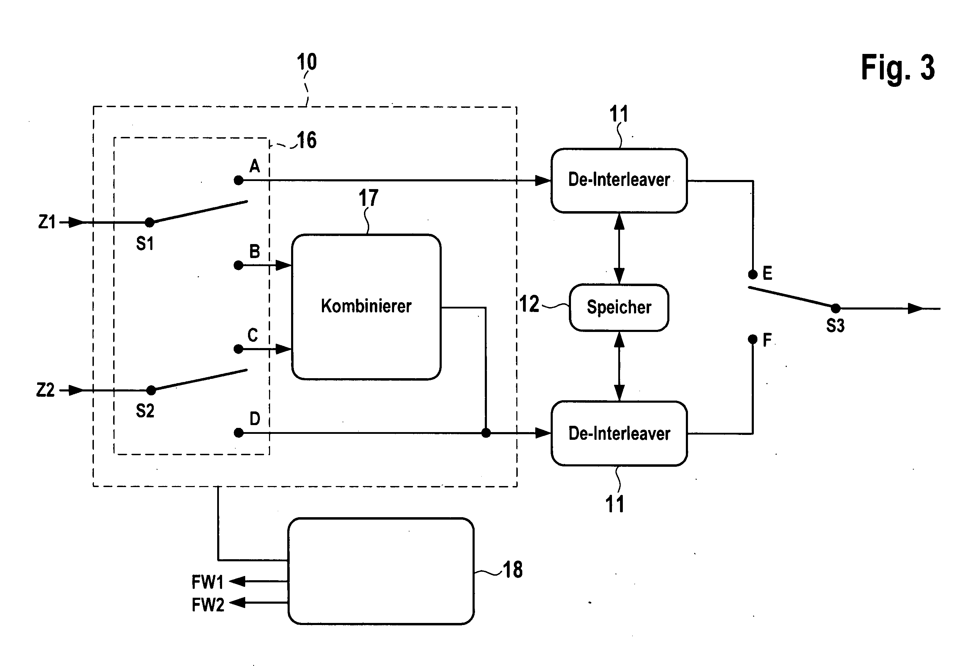

In Fig. 3 ist ein Ausschnitt aus dem DAB-Empfänger 1 detaillierter dargestellt, der die Schalt- und Kombiniereinheit 10, den De-Interleaver 11 und den Speicher 13 umfasst. Die Schalt- und Kombiniereinheit 10 umfasst eine Schalteinheit 16 mit Schalter S1, S2 und eine Kombiniereinheit 17. Je nach Betriebsmodus steuert eine Steuereinheit 18 die Schalteinheit 16 an, so dass mindestens eines der beiden OFDM-Zwischensignale Z1, Z2 direkt an den De-Interleaver 11 weitergeleitet werden (Schalter S1 ist mit A und S2 mit D verbunden). In einem zweiten Betriebsmodus steuert die Steuereinheit 18 die Schalteinheit 16 an, dass beide OFDM-Zwischensignale Z1, Z2 an den Kombinierer 17 weitergeleitet werden (Schalter S 1 ist mit B und Schalter S2 mit C verbunden). Dort werden beide OFDM-Zwischensignale Z1, Z2 in oben beschriebener Weise kombiniert, um so eine Signalverbesserung zu erhalten.

Das kombinierte OFDM-Zwischensignal wird an den De-Interleaver 11 weitergeleitet, von wo es unmittelbar über den Schalter S3 (Schalterstellung F) an den nachfolgenden Kanaldekodierer 13 weitergegeben wird. Sollen zwei Dienste gleichzeitig auf unterschiedlichen Ensembles empfangen werden, so werden beide OFDM-Zwischensignale Z1, Z2 an den De-Interleaver 11 weitergeleitet, ohne dass diese in der Kombiniereinheit 17 kombiniert werden (Schalter S1 ist mit A verbunden und Schalter S2 mit D verbunden). Der De-Interleaver 11 ist vorgesehen für den Fall, dass die beiden Dienste in den Ensembles der OFDM-Zwischensignale Z1, Z2 als entsprechende Blöcke in dem jeweiligen Zwischensignal zeitgleich bzw. zeitlich überlappend an dem De-Interleaver 11 eintreffen. Der De-Interleaver 11 ist mit dem Speicher 12 verbunden, um zeitgleich eintreffende zu dekodierende Blöcke so zueinander zeitlich zu versetzen, dass diese nacheinander an den Kanaldekodierer 13 3 weitergegeben werden können. Z.B. kann der De-Interleaver 11, wenn Blöcke in den OFDM-Zwischensignalen Z1, Z2 gleichzeitig eintreffen, einen der Blöcke in dem Speicher 12 zwischenspeichern und dann an den nachfolgenden Kanaldekodierer 13 weiterleiten, wenn der Block des jeweils anderen OFDM-Zwischensignals vollständig an den Kanaldekodierer 13 übermittelt worden ist. Der De-Interleaver 11 bearbeitet je nach Betriebsmodus das eine OFDM-Zwischensignal oder die mehreren OFDM-Zwischensignale, so dass die Bitreihenfolge wiederhergestellt wird.

Die Steuereinheit 8 stellt die Empfangsfrequenzen in den Vorstufen 5 abhängig von dem Betriebsmodus ein. Während beim Diversity-Empfang dasselbe Funksignal durch die beiden verschiedenen Empfangspfade 2, 3 empfangen werden soll, sollen beispielsweise in dem ersten Betriebsmodus verschiedene Dienste aus verschiedenen Ensembles zeitgleich von verschiedenen Funksignalen empfangen werden. D.h. im ersten Betriebsmodus (Empfang eines oder mehrerer Dienste) stellt die Steuereinheit 18 die Vorstufen 5 auf verschiedene den verschiedenen Ensembles entsprechende Funksignale ein und beim Diversity-Empfang stellt die Steuereinheit 18 die Empfangsfrequenzen auf die gleiche Frequenz ein, um dasselbe Funksignal in beiden Empfangspfaden 2, 3 zu empfangen. Die Schalteinrichtung 16 hat somit den Vorteil, in einem Zwei-Empfängersystem sowohl einen Diversity-Empfang zu realisieren, so dass die Fehlerrate bei einem Funksignal reduziert werden kann, als auch die Möglichkeit bereitzustellen, mehrere Dienste aus verschiedenen Ensembles zu empfangen und einem Benutzer gleichzeitig bereitzustellen.

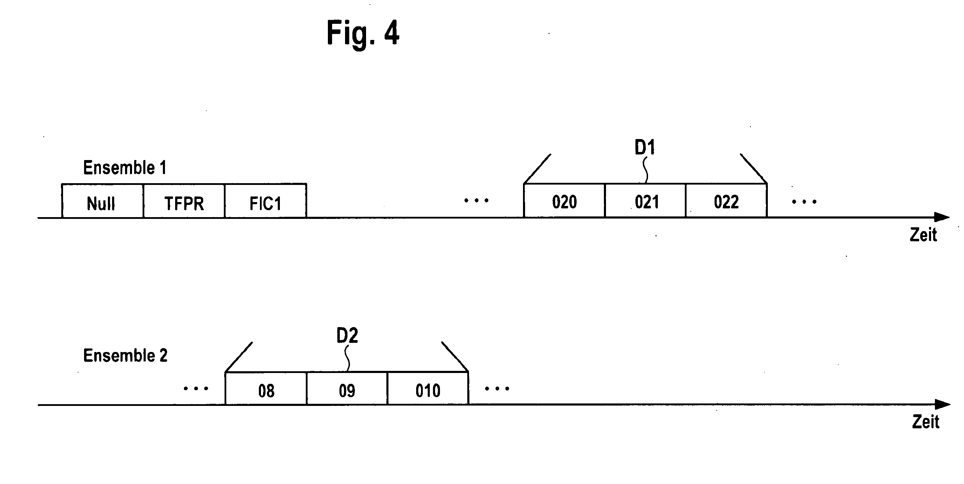

Da bei DAB nur die OFDM-Symbole in dem Ensemble dekodiert werden müssen, die den zu empfangenen Dienst enthalten, besteht bei dem Empfang von zwei verschiedenen Ensembles auf verschiedenen Empfangsfrequenzen die Möglichkeit, sowohl einen Diversity-Empfang zu realisieren als auch die beiden Dienste dem Benutzer bereitzustellen, wenn die Blöcke, die die entsprechenden Dienste in den Ensembles enthalten, zeitlich zueinander versetzt gesendet werden. In Fig. 4 sind zwei Ensembles schematisch dargestellt, wobei das erste Ensemble einen ersten Dienst D1 und das zweite Ensemble einen zweiten Dienst D2 zeitlich versetzt zueinander senden. Jedes Ensemble wird in gleich langen Rahmen mit mehreren Blöcken übertragen, wobei jeder Rahmen durch ein Nullsymbol, ein TFPR-Symbol und ein FIC-Symbol eingeleitet werden, mit deren Hilfe es dem Empfänger möglich ist, auf den Rahmen zu synchronisieren und Informationen dem Empfänger bereitzustellen, die angeben, welche Art von Informationen nachfolgend in den Datenblöcken gesendet wird. Da das Nullsymbol, das TFPR-Symbol und das FIC-Symbol in jedem Rahmen vorkommen und identische Informationen enthalten, ist es möglich, dass diese nicht in jedem Rahmen ausgewertet werden, sondern nur in jedem zweiten, in jedem dritten usw. Rahmen ausgewertet werden müssen, was zu einer hinreichend genauen Synchronisation und ausreichenden Inhaltsinformationen führt. Somit ist es möglich, für eine bestimmte Zeit nur zum Empfangen eines Dienstes auf das Empfangen des Funksignals für den jeweiligen Block zu schalten, während in der übrigen Zeit der Empfangspfad auf eine andere Frequenz eingestellt ist. In diesem Fall lassen sich der Empfang von mehreren, d.h. zwei Diensten ermöglichen und gleichzeitig der Diversity-Empfang nutzen. Die Schalteinheit 16 ist dabei ensprechend der zweiten Betriebsart geschaltet, so dass die beiden OFDM-Zwischensignale Z1, Z2 an den Kombinierer 17 geleitet werden, um das kombinierte Zwischensignal zu erzeugen. Das kombinierte Zwischensignal wird durch den De-Interleaver 11 an den Kanaldekodierer geleitet. Die Steuereinheit 18 nutzt nun die Frequenzwahlsignale FW1, FW2, um zwischen dem Empfangen des ersten Datendienstes D1 in dem Zeitfenster des ersten Datendienstes D1 und dem Empfangen des zweiten Datendienstes D2 in dem entsprechenden Zeitfenster des zweiten Datendienstes D2 hin und her zu schalten. So werden erst die Symbole 020 bis 022 des ersten Dienstes D1 vom ersten Ensemble durch beide Empfangseinheiten empfangen und dekodiert und anschließend die Symbole 08 bis O10 des zweiten Datendienstes D2.

D.h., die Steuereinheit 18 stellt mit Hilfe der Frequenzsignale FW1 und FW2 die Empfangsfrequenz auf den Empfang des ersten Ensembles in beiden Empfangspfaden 2, 3 ein und empfängt die Blöcke 020 bis 022 für den ersten Datendienst D1 und wechselt anschließend die Empfangsfrequenz auf die Empfangsfrequenz des zweiten Ensembles, um mit beiden Empfangspfaden die Blöcke 08 bis O10 des zweiten Datendienstes D2 zu empfangen. In regelmäßigen Abständen ist es jedoch notwendig, die Anfangsblöcke eines Rahmens jedes Ensembles zu dekodieren, so dass in diesen Fällen wieder auf den ersten Betriebsmodus geschaltet wird, und die Zwischensignale Z1 und Z2 von beiden Ensembles (die Empfangspfade sind dabei auf verschiedene Empfangsfrequenzen eingestellt) an den De-Interleaver 11 weitergeleitet werden. Dieser Wechsel kann bei jedem zweiten, dritten usw. Rahmen durchgeführt werden, je nach Notwendigkeit des Empfangens der Anfangsblöcke der Rahmen.

Die Steuereinheit 18 kann auch die Zwischensignale Z1 und Z2 empfangen und deren Signalqualität z.B. in Form eines Signal-Rausch-Verhältnisses ermitteln. Die Steuereinheit 18 kann dann zwischen dem ersten und zweiten Betriebsmodus wechseln, in Abhängigkeit von der Signalqualität der Zwischensignale Z1, Z2. Hierbei ist eine Prioritätensteuerung sinnvoll, wobei jeder der Dienste mit einer bestimmten Priorität versehen sein kann. Hierbei ist es sinnvoll, dass einem Audiodatendienst eine höhere Priorität zugeordnet wird wie einem Nutzdatendienst, da Unterbrechungen in einem Audiosignal für den Benutzer sofort bemerkbar sind. Der DAB-Empfänger kann dann in schwierigen Empfangssituationen, d.h. bei schlechten Signalqualitäten der Empfangssignale den Diversity-Empfang benutzen, d.h. die Empfangsfrequenzen der Vorstufen 5 in beiden Empfangspfaden 2, 3 auf dieselbe Empfangsfrequenz einstellen und gemäß dem zweiten Betriebsmodus die OFDM-Zwischensignale Z1, Z2 dem Kombinierer 17 zuführen, um eine Qualitätsverbesserung des empfangenen Audiosignals zu erreichen.

Der DAB-Empfänger 1, wie er in Verbindung mit den Figuren 1 bis 3 beschrieben wurde, kann auch ausgeführt sein, indem nach den Analog-Digital-Wandlern 6 der beiden Empfangspfade 2, 3 ein Speicher vorgesehen ist, der nacheinander die betreffenden Blöcke des ersten und des zweiten Ensembles an gemeinsam ausgeführte Mischer und Filter 7 sowie einem Demodulator 8 zugeführt werden, so dass der zusätzliche Schaltungsaufwand dafür für den De-Interleaver reduziert werden kann.

## Patentansprüche

1. Empfänger (1) zum Empfangen von digitalen Funksignalen und zum Bereitstellen eines Datenstromes, umfassend:
- mehrere Empfangseinheiten (5, 6, 7, 8), die jeweils gestaltet sind, um ein digitales Funksignal zu empfangen und zu einem Zwischensignal zu demodulieren;
- eine Kombiniereinheit (17), um die Zwischensignale zur Verbesserung der Qualität zu einem resultierenden kombinierten Zwischensignal zu kombinieren;
- eine Schalteinheit (16), die mit den Empfangseinheiten (5, 6, 7, 8) verbunden ist und
die gestaltet ist, um entweder in einem ersten Betriebsmodus mindestens eines der Zwischensignale der mehreren Empfangseinheiten (5, 6, 7, 8) zum Dekodieren auszuwählen oder um in einem zweiten Betriebsmodus die Zwischensignale der mehreren
Empfangseinheiten der Kombiniereinheit (17) zur Verfügung zu stellen und zur Verbesserung der Qualität des Zwischensignals zu kombinieren;
- einen Kanaldekodierer (13), der mit der Schalteinheit (16) und der Kombiniereinheit (17) verbunden ist, um entweder das von der Schalteinheit (16) ausgewählte mindestens eine Zwischensignal oder das von der Kombiniereinheit (17) kombinierte Zwischensignal zu einem Datenstrom zu dekodieren, wobei eine Steuereinheit (18) zum Auswählen des Betriebsmodus vorgesehen ist, wobei die Steuereinheit (18) mit den Empfangseinheiten (5, 6, 7, 8) verbunden ist, um die Empfangseinheiten (5, 6, 7, 8) in dem zweiten Betriebsmodus auf dasselbe Funksignal abzustimmen und um die Empfangseinheiten (5, 6, 7, 8) in dem ersten Betriebsmodus auf verschiedene Funksignale abzustimmen, und wobei jedes der Zwischensignale (Z1, Z2) Rahmen aufweist, in denen jeweils mehrere Datendienste in Blöcken angeordnet sind, wobei die Steuereinheit (18) eine Detektionseinheit zum Detektieren der zeitlichen Position der Blöcke aufweist, um bei einem zeitlich nicht überlappenden Empfangen von Blöcken der mehreren Zwischensignale zwischen dem ersten und dem zweiten Betriebsmodus zu wechseln.

2. Empfänger nach Anspruch 1, wobei die Schalteinheit (16) gestaltet ist, um ein erstes und zweites Zwischensignal (Z1, Z2) dem Kanaldekodierer (13) in dem ersten Betriebsmodus zur Verfügung zu stellen, wobei die Steuereinheit (18) in dem zweiten Betriebsmodus die mehreren Empfangseinheiten (5, 6, 7, 8) wechselweise zum Empfangen des dem ersten Zwischensignal zugrunde liegenden Funksignals und des dem zweiten Zwischensignal zugrunde liegenden Funksignals abstimmt.

3. Empfänger nach Anspruch 1 oder 2, wobei die Kombiniereinheit (17) die Zwischensignale addiert, um das kombinierte Zwischensignal zu erhalten.

4. Empfänger nach Anspruch 3, wobei die Kombiniereinheit (17) gestaltet ist, um vor dem Addieren die Zwischensignale abhängig von einer jeweiligen Empfangsqualität des dem Zwischensignal zugrundeliegenden Funksignals mit einem Gewichtungsfaktor zu gewichten.

5. Empfänger nach einem der Ansprüche 1 bis 4, wobei die Zwischensignale Ensembles mit mehreren Datendiensten aufweisen, die in den Blöcken innerhalb des Rahmens bereitgestellt werden, wobei die Schalteinheit (16) weiterhin gestaltet ist, um die mehreren Zwischensignale einer De-Interleaver-Einheit (11) zur Verfügung zu stellen und wobei die De-Interleaver-Einheit (11) gestaltet ist, um aus den mehreren Zwischensignalen jeweils mindestens einen Block auszuwählen und die Blöcke nacheinander dem Kanaldekodierer (12) zur Verfügung zu stellen.

6. Empfänger (1) nach Anspruch 4, wobei die De-Interleaver-Einheit (11) eine Speichereinheit aufweist, um sich zeitlich überlappende Blöcke verschiedener Zwischensignale zwischenzuspeichern und diese mit Hilfe einer weiteren Schalteinheit nacheinander an den Kanaldekodierer (13) auszugeben, wobei der Kanaldekodierer (13) gestaltet ist, um die Blöcke der verschiedenen Zwischensignale zu mehreren Datenströmen zu dekodieren.

7. Verfahren zum Empfangen von digitalen Funksignalen und zum Bereitstellen mindestens eines Datenstromes, mit folgenden Schritten:
- Empfangen von mehreren digitalen Funksignalen;
- Demodulieren der mehreren Funksignale jeweils zu einem Zwischensignal;
- in einem ersten Betriebsmodus, Auswählen mindestens eines der Zwischensignale zum Dekodieren, oder in einem zweiten Betriebsmodus Kombinieren der Zwischensignale zu einem kombinierten Zwischensignal zur Verbesserung der Qualität des Zwischensignals;
- Dekodieren entweder des ausgewählten Zwischensignals oder des kombinierten Zwischensignals zu einem Datenstrom, mit den weiteren Schritten:
- in dem zweiten Betriebsmodus, mehrfaches Empfangen desselben Funksignals; und
- in dem ersten Betriebsmodus Empfangen von verschiedenen Funksignalen und wobei jedes der Zwischensignale Rahmen aufweist, in denen jeweils mehrere Datendienste in Blöcken angeordnet sind, wobei die zeitliche Position der Blöcke der mehreren Zwischensignale detektiert wird, wobei bei einem zeitlich nicht überlappenden Empfangen der Blöcke der mehreren Zwischensignale zwischen dem ersten und dem zweiten Betriebsmodus gewechselt wird, um mehrere Datenströme zu erhalten und die Qualität der Zwischensignale zu verbessern.

8. Verfahren nach Anspruch 7, wobei die Zwischensignale Ensembles mit mehreren Datendiensten aufweisen, die in den Blöcken innerhalb der Rahmen bereitgestellt werden, wobei aus den mehreren Zwischensignalen jeweils mindestens ein Block ausgewählt wird und die ausgewählten Blöcke nacheinander dekodiert werden.

9. Verfahren nach Anspruch 8, wobei sich zeitlich überlappende Blöcke verschiedener Zwischensignale zwischengespeichert werden und die Blöcke nacheinander zum Dekodieren weitergegeben werden.

## Claims

1. Receiver (1) for receiving digital radio signals and for providing a data stream, comprising:
- a plurality of reception units (5, 6, 7, 8) which are each designed to receive a digital radio signal and to demodulate it to form an intermediate signal;
- a combining unit (17) in order to combine the intermediate signals to form a resulting combined intermediate signal in order to improve the quality;
- a switching unit (16) which is connected to the reception units (5, 6, 7, 8) and which is designed either to select at least one of the intermediate signals from the plurality of reception units (5, 6, 7, 8) for decoding in a first mode of operation or to provide the intermediate signals from the plurality of reception units for the combining unit (17) and to combine them in order to improve the quality of the intermediate signal in a second mode of operation;
- a channel decoder (13) which is connected to the switching unit (16) and to the combining unit (17) in order to decode either the at least one intermediate signal selected by the switching unit (16) or the intermediate signal combined by the combining unit (17) to form a data stream, wherein a control unit (18) for selecting the mode of operation is provided, wherein the control unit (18) is connected to the reception units (5, 6, 7, 8) in order to tune the reception units (5, 6, 7, 8) to the same radio signal in the second mode of operation and in order to tune the reception units (5, 6, 7, 8) to different radio signals in the first mode of operation, and wherein each of the intermediate signals (Z1, Z2) has frames which each contain a plurality of data services arranged in blocks, wherein the control unit (18) has a detection unit for detecting the position of the blocks in time in order to change between the first and second mode of operation in the event of blocks of the plurality of intermediate signals being received without a time overlap.

2. Receiver according to Claim 1, wherein the switching unit (16) is designed to provide a first and a second intermediate signal (Z1, Z2) for the channel decoder (13) in the first mode of operation, wherein the control unit (18) alternately tunes the plurality of reception units (5, 6, 7, 8) to receive the radio signal on which the first intermediate signal is based and the radio signal on which the second intermediate signal is based in the second mode of operation.

3. Receiver according to Claim 1 or 2, wherein the combining unit (17) adds the intermediate signals in order to obtain the combined intermediate signal.

4. Receiver according to Claim 3, wherein the combining unit (17) is designed to weight the intermediate signals on the basis of a respective reception quality for the radio signal on which the intermediate signal is based prior to the addition.

5. Receiver according to one of the Claims 1 to 4, wherein the intermediate signals have ensembles having a plurality of data services which are provided in the blocks within the frame, wherein the switching unit (16) is furthermore designed to provide the plurality of intermediate signals for the de-interleaver unit (11) and wherein the de-interleaver unit (11) is designed to select at least one respective block from the plurality of intermediate signals and to provide the blocks in succession for the channel decoder (13).

6. Receiver (1) according to Claim 4, wherein the de-interleaver unit (11) has a memory unit in order to buffer-store temporally overlapping blocks of different intermediate signals and to output said blocks in succession to the channel decoder (13) using a further switching unit, wherein the channel decoder (13) is designed to decode the blocks of the different intermediate signals to form a plurality of data streams.

7. Method for receiving digital radio signals and for providing at least one data stream, having the following steps:
- a plurality of digital radio signals are received;
- the plurality of radio signals are demodulated to form a respective intermediate signal;
- in a first mode of operation, at least one of the intermediate signals is selected for decoding, or in a second mode of operation, the intermediate signals are combined to form a combined intermediate signal in order to improve the quality of the intermediate signal;
- either the selected intermediate signal or the combined intermediate signal is decoded to form a data stream, having the following further steps:
- in the second mode of operation, the same radio signal is received a plurality of times; and
- in the first mode of operation, different radio signals are received and wherein each of the intermediate signals has frames which each contain a plurality of data services arranged in blocks, wherein the position of the blocks of the plurality of intermediate signals in time is detected, wherein if the blocks of the plurality of intermediate signals are received without an overlap in time then there is a change between the first and second modes of operation in order to obtain a plurality of data streams and to improve the quality of the intermediate signals.

8. Method according to Claim 7, wherein the intermediate signals have ensembles having a plurality of data services which are provided in the blocks within the frames, wherein at least one respective block is selected from the plurality of intermediate signals, and the selected blocks are decoded in succession.

9. Method according to Claim 8, wherein temporally overlapping blocks of different intermediate signals are buffer-stored and the blocks are forwarded in succession for decoding.

## Revendications

1. Récepteur (1) pour recevoir des signaux radioélectriques numériques et pour délivrer un flux de données, comprenant :
- plusieurs unités de réception (5, 6, 7, 8) qui sont respectivement configurées pour recevoir un signal radioélectrique numérique et pour le démoduler en un signal intermédiaire ;
- une unité de combinaison (17) pour combiner les signaux intermédiaires en un signal intermédiaire combiné résultant en vue d'améliorer la qualité ;
- une unité de commutation (16) avec laquelle sont reliées les unités de réception (5, 6, 7, 8) et qui est configurée soit pour, dans un premier mode de fonctionnement, sélectionner au moins l'un des signaux intermédiaires des plusieurs unités de réception (5, 6, 7, 8) en vue de les décoder, soit pour, dans un deuxième mode de fonctionnement, mettre les signaux intermédiaires des plusieurs unités de réception à la disposition de l'unité de combinaison (17) et les combiner en vue d'améliorer la qualité du signal intermédiaire ;
- un décodeur de canal (13) qui est relié avec l'unité de commutation (16) et l'unité de combinaison (17) pour décoder en un flux de données soit l'au moins un signal intermédiaire sélectionné par l'unité de commutation (16), soit le signal intermédiaire combiné par l'unité de combinaison (17), une unité de commande (18) étant prévue pour sélectionner le mode de fonctionnement, l'unité de commande (18) étant reliée avec les unités de réception (5, 6, 7, 8) afin d'accorder les unités de réception (5, 6, 7, 8) sur le même signal radioélectrique dans le deuxième mode de fonctionnement et afin d'accorder les unités de réception (5, 6, 7, 8) sur des signaux radioélectriques différents dans le premier mode de fonctionnement, et chacun des signaux intermédiaires (Z1, Z2) présentant des trames dans lesquelles plusieurs services de données sont à chaque fois disposés en blocs, l'unité de commande (18) présentant une unité de détection pour détecter la position dans le temps des blocs afin de pouvoir basculer entre le premier et le deuxième mode de fonctionnement dans le cas d'une réception sans chevauchement dans le temps de blocs des plusieurs signaux intermédiaires.

2. Récepteur selon la revendication 1, dans lequel l'unité de commutation (16) est configurée pour mettre un premier et un deuxième signal intermédiaire (Z1, Z2) à la disposition du décodeur de canal (13) dans le premier mode de fonctionnement, l'unité de commande (18), dans le deuxième mode de fonctionnement, accordant alternativement les plusieurs unités de réception (5, 6, 7, 8) pour recevoir le signal radioélectrique sur lequel se base le premier signal intermédiaire et le signal radioélectrique sur lequel se base le deuxième signal intermédiaire.

3. Récepteur selon la revendication 1 ou 2, dans lequel l'unité de combinaison (17) additionne les signaux intermédiaires pour obtenir le signal intermédiaire combiné.

4. Récepteur selon la revendication 3, dans lequel l'unité de combinaison (17) est configurée pour pondérer le signal radioélectrique sur lequel se base le signal intermédiaire avec un facteur de pondération avant d'additionner les signaux intermédiaires en fonction d'une qualité de réception respective.

5. Récepteur selon l'une des revendications 1 à 4, dans lequel les signaux intermédiaires présentent des ensembles avec plusieurs services de données qui sont fournis dans les blocs à l'intérieur de la trame, l'unité de commutation (16) étant en outre configurée pour mettre les plusieurs signaux intermédiaires à la disposition d'une unité de désentrelacement (11) et l'unité de désentrelacement (11) étant configurée pour sélectionner à chaque fois au moins un bloc à partir des plusieurs signaux intermédiaires et pour mettre les blocs les uns après les autres à la disposition du décodeur de canal (13).

6. Récepteur (1) selon la revendication 4, dans lequel l'unité de désentrelacement (11) présente une unité de mémoire pour mémoriser temporairement les blocs qui se chevauchent dans le temps de différents signaux intermédiaires et délivrer ceux-ci l'un après l'autre au décodeur de canal (13) à l'aide d'une autre unité de commutation, le décodeur de canal (13) étant configuré pour décoder les blocs des différents signaux intermédiaires en plusieurs flux de données.

7. Procédé pour recevoir des signaux radioélectriques numériques et pour délivrer au moins un flux de données, comprenant les étapes suivantes :
- réception de plusieurs signaux radioélectriques numériques ;
- démodulation des plusieurs signaux radioélectriques à chaque fois en un signal intermédiaire ;
- dans un premier mode de fonctionnement, sélection d'au moins l'un des signaux intermédiaires en vue de le décoder ou, dans un deuxième mode de fonctionnement, combinaison des signaux intermédiaires en un signal intermédiaire combiné en vue d'améliorer la qualité du signal intermédiaire ;
- décodage soit du signal intermédiaire sélectionné, soit du signal intermédiaire combiné en un flux de données, avec les étapes supplémentaires suivantes :
- dans le deuxième mode de fonctionnement, réception multiple du même signal radioélectrique ; et
- dans le premier mode de fonctionnement, réception de signaux radioélectriques différents et chacun des signaux intermédiaires présentant des trames dans lesquelles plusieurs services de données sont à chaque fois disposés en blocs, la position dans le temps des blocs des plusieurs signaux intermédiaires étant détectée, un basculement entre le premier et le deuxième mode de fonctionnement ayant lieu dans le cas d'une réception sans chevauchement dans le temps des blocs des plusieurs signaux intermédiaires afin de recevoir plusieurs flux de données et en vue d'améliorer la qualité des signaux intermédiaires.

8. Procédé selon la revendication 7, selon lequel les signaux intermédiaires présentent des ensembles avec plusieurs services de données qui sont fournis dans les blocs à l'intérieur trames, au moins un bloc étant à chaque fois sélectionné à partir des plusieurs signaux intermédiaires et les blocs sélectionnés étant décodés l'un après l'autre.

9. Procédé selon la revendication 8, selon lequel les blocs qui se chevauchent dans le temps de différents signaux intermédiaires sont mémorisés temporairement et les blocs sont retransmis l'un après l'autre en vue de leur décodage.
